# FASCICULE DE BREVET EUROPEEN

(11) **EP 0 776 498 B1**
(45) Date de publication et mention de la délivrance du brevet: **14.11.2007**
(21) Numéro de dépôt: 95927766.6
(22) Date de dépôt: 08.08.1995
(51) Int. Cl.: G06F 21/00, H03K 17/96, H03M 11/00, G06F 3/02

(54) **DISPOSITIF DE CLAVIER SECURISE**
GESICHERTE TASTATUREINRICHTUNG
PROTECTED KEYBOARD DEVICE

(30) Priorité: 17.08.1994 FR 9410076
(43) Date de publication de la demande: 04.06.1997
(73) Titulaire: Axalto S.A., 92190 Meudon (FR)
(72) Inventeur: RHELIMI, Alain, F-92120 Montrouge (FR)
(74) Mandataire: Cour, Pierre
(86) Numéro de dépôt international: PCT/FR1995/001061
(87) Numéro de publication internationale: WO 1996/005548

(56) Documents cités:
- EP-A- 0 248 712
- EP-A- 0 573 719
- DE-A- 4 126 760
- FR-A- 2 693 815
- GB-A- 2 223 115
- US-A- 4 926 173

## Description

La présente invention a pour objet un dispositif de clavier sécurisé pour l'entrée d'informations dans une machine.

De façon plus précise, l'invention concerne un dispositif de clavier sécurisé pour l'entrée d'informations dans une machine servant à commander celle-ci qui permette d'empêcher les tentatives de fraude consistant à intercepter l'information entrée à l'aide du clavier.

Dans un très grand nombre de systèmes, les informations nécessaires pour la commande de machines sont introduites notamment par un dispositif d'interfaçage qui consiste en un clavier à touches mécanique ou, le plus souvent, virtuelles, c'est-à-dire des touches non mécaniques dont l'actionnement est détecté par un capteur, permettant à l'utilisateur d'entrer ces informations de commande.

Lorsque l'accès à la commande de ces machines doit être contrôlé et notamment lorsque l'accès à ces machines est contrôlé par l'insertion d'un support d'informations tel qu'une carte comportant une information confidentielle liée au porteur, l'utilisateur, pour pouvoir accéder à la machine, doit entrer simultanément à l'aide du clavier l'information confidentielle. Il est clair que pour éviter des fraudes il est nécessaire d'introduire des moyens interdisant à un fraudeur d'essayer d'enregistrer la nature des signaux associés à l'information confidentielle contenue dans le support.

Cette situation se présente notamment dans les distributeurs de billets actionnés par des cartes à mémoire électronique ou dans le cas de terminaux de paiement électronique permettant de régler des achats à l'aide d'une carte à mémoire électronique.

La solution la plus simple pour tenter de frauder un tel clavier est de connecter sur la matrice de clavier une matrice d'espionnage permettant de prélever ces signaux et de les enregistrer. Une autre solution est de prélever les signaux de décodage du clavier et d'en déduire la touche active.

Un type de solution a déjà été proposé pour résoudre ce problème. Il consiste à interdire l'accès à l'ensemble des circuits électroniques associés au clavier. Cette technique est dite "à protection physique" et consiste à confiner l'ensemble de l'électronique et de la mécanique du clavier dans une enceinte de sécurité. L'accès à cette enceinte de sécurité est surveillé par de nombreux capteurs d'intrusion.

Lors de la détection d'une intrusion, une procédure de destruction au moins de la partie des circuits contenant les informations secrètes est déclenchée.

On comprend qu'une telle solution, et notamment l'implantation de capteurs permettant de détecter toute tentative d'intrusion, est très onéreuse et de plus entraîne des coûts de remise en état de fonctionnement du système.

On connaît de la demande de brevet allemand n° 4126760 un dispositif de clavier sécurisé comprenant un dispositif d'entrée dans lequel les informations entrées sont cryptées immédiatement avec l'actionnement d'une touche et sont retransmises sous cette forme. De même, la demande de brevet français n° 2693815 décrit un clavier de saisie de données protégé contre l'observation par des tiers non utilisateurs dans lequel la signification des touches est modifiée de manière aléatoire au moins à chaque transaction réalisée avec l'appareil comportant le clavier. Enfin, les demandes de brevet européen n° 0 248 712 et 0 573 719, divulguent un dispositif de clavier sécurisé comprenant des moyens pour interroger les touches.

Un objet de la présente invention est de fournir un dispositif de clavier sécurisé qui interdise efficacement les tentatives de fraude ou d'effraction mentionnées ci-dessus tout en étant d'un coût de mise en oeuvre limité ou du moins compatible avec le coût de l'ensemble de l'installation.

Pour atteindre ce but, l'invention propose un dispositif de clavier sécurisé pour l'entrée d'informations dans une machine, comprenant :
- un clavier comportant n zones sensibles,
- n capteurs de détection, chaque capteur étant associé à une zone sensible pour détecter l'actionnement de la zone sensible associée,
- n circuits individuels de traitement, chaque circuit étant associé à un capteur et comportant des moyens de cryptage d'une détection ou d'une non-détection d'activation de la zone sensible associée audit capteur, et chaque ensemble constitué par un circuit individuel de traitement et par le capteur associé ayant une structure physiquement monolithique formant une touche sécurisée,
- un ensemble de gestion dudit clavier,
- des moyens de liaison électrique pour la transmission d'informations entre ledit ensemble de gestion du clavier et chacun desdits n circuits individuels de traitement, ledit ensemble de gestion comportant des moyens pour provoquer périodiquement l'interrogation desdits circuits individuels de traitement pour la transmission en retour sur lesdits moyens de liaison électrique des informations cryptées d'activation ou de non-activation de chacune desdites zones sensibles.

En d'autres termes, le dispositif de clavier sécurisé pour l'entrée d'informations dans une machine est composé de N touches sécurisées.

Chaque touche sécurisée, physiquement monolithique, est constituée :
- d'un circuit de traitement
- d'un capteur (zone sensible de détection)
- d'un moyen de communication.

Chaque circuit de traitement permet le cryptage de l'information d'activation ou de non activation de la touche fournie par le capteur puis cette information cryptée est transmise cycliquement à l'extérieur de la touche sécurisée vers l'ensemble de gestion, grâce au moyen de communication.

On comprend qu'une telle disposition résout effectivement le problème posé. En effet, d'une part, la touche sécurisée est monolithique, à savoir réalisée dans un même circuit intégré (semiconducteur) et donc physiquement non démontable sans destruction. Il est impossible physiquement de prélever un signal de détection lié à l'activation de la touche. En outre, en ce qui concerne les moyens de liaison électrique entre les différents circuits individuels de traitement et l'ensemble de gestion du clavier, le prélèvement des signaux de transit ne fournit aucune information utilisable puisque chaque circuit individuel de traitement émet un signal et que ces signaux sont cryptés.

Selon différents modes préférés de mise en oeuvre de l'invention, les capteurs associés aux zones sensibles sont des capteurs capacitifs de préférence, ou éventuellement des détecteurs optoélectroniques ou encore des détecteurs électromagnétiques du type à circuit oscillant amorti. Dans tous les cas, le composant de détection est réalisé directement sur la pastille semi-conductrice dans laquelle sont réalisés les différents composants du circuit électronique de traitement.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1 est une vue schématique de l'ensemble du clavier sécurisé ;
- la figure 2 est un bloc diagramme montrant la structure du circuit individuel de traitement ;

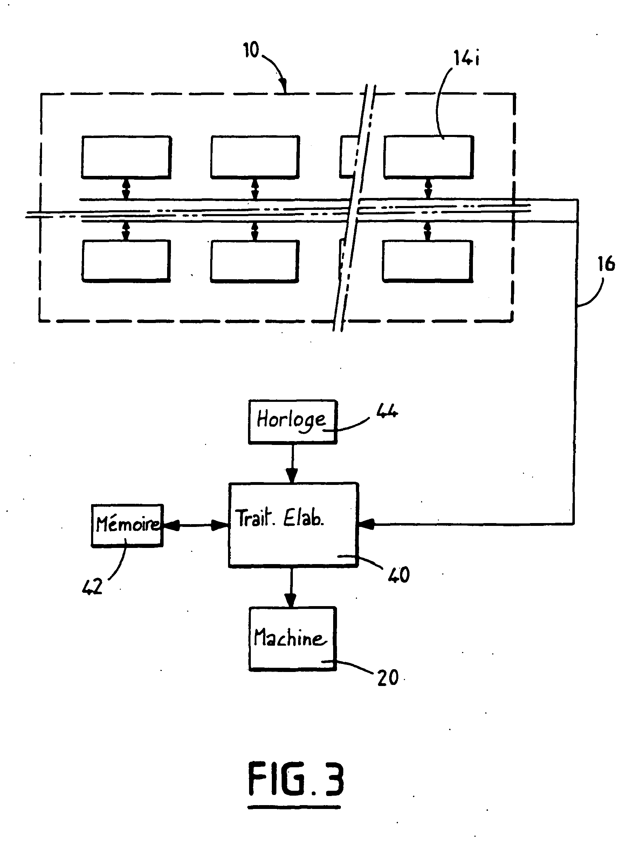

- la figure 3 est un schéma simplifié montrant l'organisation du dispositif de clavier sécurisé ; et
- la figure 4 est une vue en coupe verticale simplifiée montrant l'implantation d'un circuit individuel de traitement et son capteur associé dans le cas où celui-ci est un capteur capacitif.

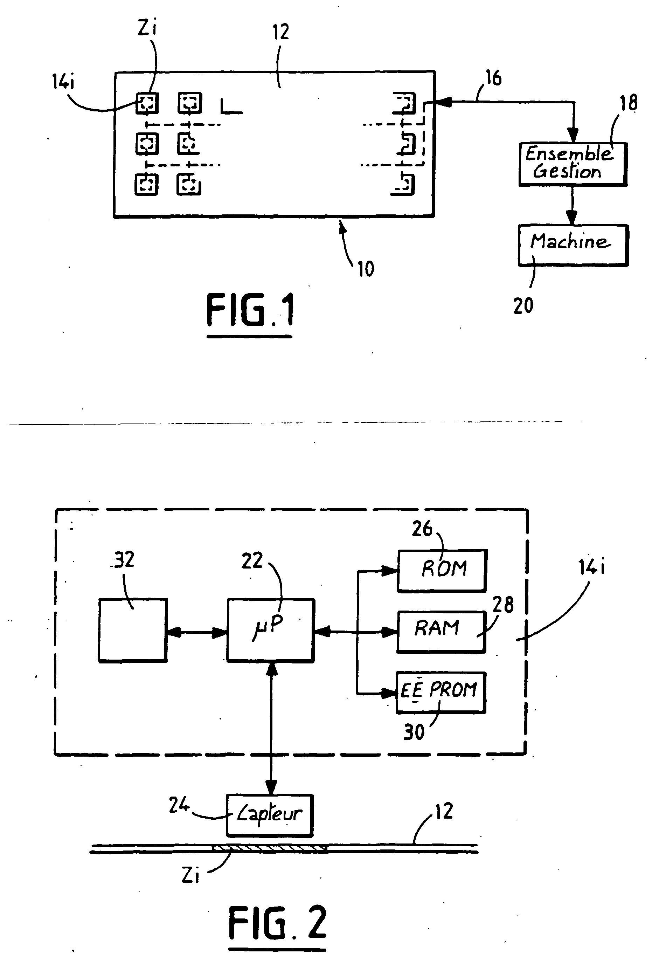

En se référant tout d'abord à la figure 1, on va décrire l'ensemble du dispositif de clavier sécurisé. Celui-ci comprend un clavier proprement dit 10 qui, sur sa face avant 12, comporte une pluralité de zones sensibles telles que Zi, chaque zone sensible étant associée à une information ou une partie d'informations à introduire. Dans le cas de la présente invention, chaque zone sensible est associée à un capteur non visible sur la figure 1, qui permet de détecter que la zone sensible a été activée à l'aide du doigt ou non. L'ensemble constitué par la zone sensible et son capteur associé constitue ainsi une touche virtuelle du clavier qui délivre un signal électrique en cas d'activation et aucun signal électrique pour les zones sensibles non activées. Selon l'invention, on associe à chaque touche virtuelle Zi un circuit individuel de traitement 14i qui est représenté schématiquement sur la figure et qui sera décrit plus en détail ultérieurement. Les différents circuits de traitement 14i sont reliés à un bus 16 de transmission d'informations, le bus 16 étant lui-même relié à un ensemble de gestion du clavier 18 qui, dans le cas de la présente invention, présente une structure particulière comme on l'expliquera ultérieurement. L'ensemble de gestion du clavier est relié à la machine proprement dite 20 dans laquelle le clavier 10 permet d'introduire des informations de commande.

La figure 2 illustre un mode préféré de réalisation d'un circuit individuel de traitement 14i. Celui-ci est organisé autour d'un microprocesseur 22 qui reçoit un signal d'activation ou de non-activation du capteur 24 qui lui est associé. Comme le montre la figure 2, le capteur 24 est disposé en regard de la zone sensible Zi de la face avant 12 du clavier. Le microprocesseur est associé dans le circuit individuel de traitement de façon classique à une mémoire ROM 26, une mémoire RAM 28 et une mémoire EEPROM 30. La sortie du microprocesseur, ou plus précisément les informations cryptées qu'il élabore, peuvent être transmises sur le bus 16 par l'intermédiaire du circuit d'interface 32.

La fonction essentielle du circuit 14i est d'élaborer une information cryptée donnant l'état d'activation ou de non-activation du capteur qui lui est associé et fournissant une identification de la touche à laquelle il est associé. Pour cela, la mémoire ROM 26 comporte un logiciel permettant la mise en oeuvre d'un algorithme de cryptage de ces informations qui est exécuté par le microprocesseur 22. La mémoire EEPROM comporte, de préférence, une clé spécifique de cryptage propre au circuit 14i considéré et une information d'identification de la touche concernée. La mémoire RAM permet de stocker temporairement l'information correspondante cryptée, qui comme on l'expliquera ultérieure, sera transmise via le circuit d'interface 32 sur le bus 16 en réponse à un message d'interrogation provenant de l'ensemble de gestion 18.

Selon l'invention, les différents circuits individuels de traitement 14i sont périodiquement et cycliquement interrogés par l'ensemble de gestion 18 pour transmettre en retour sur le bus 16 l'information cryptée correspondant à l'identification de la touche considérée et à l'état activé ou non activé- de la touche associée. Pour cela, le circuit de gestion comporte essentiellement un circuit d'élaboration et de traitement 40, une mémoire 42 et une horloge 44. Périodiquement, le circuit de traitement 40 émet sur le bus 16 une série d'instructions d'interrogation vers chacun des circuits individuels de traitement 14i. Les instants d'interrogation sont définis par la base de temps 44. La mémoire 42 comporte tous les éléments de logiciel pour l'élaboration des messages d'information et pour le traitement des informations cryptées reçues en retour de chacun des circuits individuels de traitement. Ces informations, c'est-à-dire essentiellement l'information relative à la touche activée, sont transmises vers la machine commandée 20 sous forme cryptée ou en clair selon les modes de mise en oeuvre. On comprend que le transit des signaux électriques entre les circuits individuels de traitement et l'ensemble de gestion est totalement indépendant de la touche virtuelle activée. Seul le contenu du signal fournit cette information mais ces signaux sont cryptés.

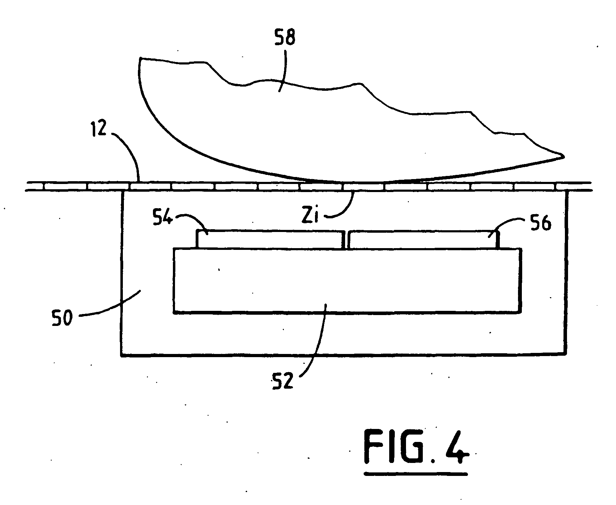

La figure 4 illustre en coupe verticale la réalisation d'une touche virtuelle et de son circuit individuel de traitement associé dans le cas où la touche virtuelle est du type capacitif. Sur cette figure, on a représenté la plaque avant 12 du clavier sur laquelle on a figuré la zone sensible Zi. Sur cette plaque, plus précisément sur sa face arrière, est fixé un boîtier 50, ce boîtier contenant d'une part la pastille semi-conductrice 52 dans laquelle sont réalisés les différents composants électroniques du circuit individuel de traitement 14i, et d'autre part les éléments constitutifs du capteur associé. Dans ce cas, deux électrodes formant les armatures d'un condensateur, respectivement référencées 54 et 56, sont réalisées sur la face supérieure de la pastille 52. Les plaques 54 et 56 sont suffisamment proches de la face avant du boîtier 12 pour que, lorsque l'utilisateur place son doigt 58 en regard des deux électrodes, on ait émission d'un signal analogique correspondant à l'activation de la touche virtuelle concernée.

On comprend que, du fait que les éléments constitutifs du capteur d'activation constitués par les dépôts conducteurs 54 et 56 sont directement déposés sur la face supérieure de la pastille. 52 comportant les composants du circuit individuels de traitement, on a une structure monolithique interdisant la mise en place de systèmes frauduleux pour tenter de détecter les signaux électriques transitant à l'intérieur du boîtier. Par ailleurs, la pastille 52 comporte également le circuit d'interfaçage entre les circuits électroniques proprement dits de la pastille 52 et les bus de transmission des informations cryptées élaborées par les circuits individuels de traitement vers l'ensemble de gestion 18.

On comprend qu'on réalise ainsi la sécurisation du clavier par la combinaison des caractéristiques suivantes. D'une part, l'ensemble constitué par le capteur associé à la zone sensible et les circuits du circuit individuel de traitement est monolithique et ne permet donc pas, ou pratiquement pas, la détection des signaux électriques élaborés. D'autre part, le fait que chaque circuit individuel de traitement reçoive périodiquement et cycliquement un message d'interrogation et qu'en réponse à ce message d'interrogation il émet une réponse que la touche correspondante ait été activée ou pas et qu'enfin les signaux circulant dans les bus soient cryptés rend impossible, même en procédant à un grand nombre de relèvement d'informations, d'associer à un signal électrique l'identification de la touche activée. Pour rendre le système encore plus sécurisé, de préférence, la clé constituant l'un des paramètres des algorithmes de cryptage est spécifique à chaque circuit individuel de traitement. Cela rend encore plus difficile le fraudage du clavier.

Dans la description précédente, on a envisage le cas où le capteur associé à chaque zone sensible est un capteur capacitif. Il va de soi que d'autres types de capteurs pourraient être utilisés. En particulier, on pourrait utiliser un capteur optoélectronique, l'élément optiquement sensible étant déposé sur la face supérieure de la pastille semi-conductrice, le boîtier du circuit comportant une fenêtre optique. On pourrait également utiliser un capteur électromagnétique du type à circuit oscillant amorti. Dans ce cas encore, la bobine du capteur est directement réalisée sur ou dans la pastille semi-conductrice dans laquelle est formé le circuit de traitement.

Pour accroître encore la sécurité du clavier, on peut réaliser la face avant 12 du clavier avec un matériau transparent. Ainsi, la mise en place dans le clavier de conducteurs frauduleux destinés à réaliser une matrice d'espionnage à détection capacitive pourra être visuellement détectée.

## Revendications

1. Dispositif de clavier sécurisé pour l'entrée d'informations dans une machine, comprenant :
- un clavier comportant n zones sensibles (Zi),
- n capteurs (24) de détection, chaque capteur étant associé à une zone sensible pour détecter l'actionnement de la zone sensible associée,
- n circuits individuels (14i) de traitement, chaque circuit étant associé à un capteur et comportant des moyens (22, 26, 28, 30) de cryptage d'une détection ou d'une non-detection d'activation de la zone sensible associée audit capteur, et chaque ensemble constitué par un circuit individuel de traitement et par le capteur associé ayant une structure physiquement monolithique formant une touche sécurisée,
- un ensemble (18) de gestion dudit clavier,
- des moyens (16) de liaison électrique pour la transmission d'informations entre ledit ensemble de gestion du clavier et chacun desdits n circuits individuels de traitement, ledit ensemble de gestion comportant des moyens (40, 42, 44) pour provoquer périodiquement l'interrogation desdits circuits individuels de traitement pour la transmission en retour sur lesdits moyens (16) de liaison électrique des informations cryptées d'activation ou de non-activation de chacune desdites zones sensibles.

2. Dispositif de clavier selon la revendication 1, **caractérisé en ce que** lesdits capteurs sont des détecteurs capacitifs activés par l'action d'un doigt sur la zone sensible correspondante.

3. Dispositif de clavier selon la revendication 2, **caractérisé en ce que** chaque circuit individuel (14i) est enfermé dans un boîtier (50) et **en ce que** les armatures de détection du condensateur (54, 56) sont formées directement sur la pastille semi-conductrice (52) dans laquelle est réalisé le circuit.

4. Dispositif de clavier selon la revendication 1, **caractérisé en ce que** lesdits capteurs sont des détecteurs optoélectriques activés par la présence d'un doigt sur la zone sensible associée.

5. Dispositif de clavier selon la revendication 4, **caractérisé en ce que** chaque circuit individuel de traitement est enfermé dans un boîtier présentant une fenêtre optique et **en ce que** ledit détecteur optoélectrique est formé directement sur la pastille semi-conductrice dans laquelle est réalisé le circuit.

6. Dispositif de clavier selon la revendication 1, **caractérisé en ce que** lesdits capteurs sont des capteurs électromagnétiques.

7. Dispositif de clavier selon la revendication 6, **caractérisé en ce que** chaque circuit individuel (14i) est enfermé dans un boîtier et **en ce que** la bobine de détection électromagnétique est formée directement sur la pastille semi-conductrice dans laquelle est réalisé le circuit individuel.

8. Dispositif de clavier selon l'une quelconque des revendications 1 à 7, **caractérisé en ce que** chaque circuit individuel de traitement (14i) comprend un microprocesseur (22) recevant le signal de détection, des moyens de mémoire (26, 28, 36) pour stocker des éléments de cryptage de l'information de détection et de mise en oeuvre d'un algorithme de cryptage, et des moyens (32) pour transmettre aux moyens de liaison électrique (16), les informations cryptées élaborées par ledit microprocesseur.

9. Dispositif de clavier selon l'une quelconque des revendications 1 à 8, **caractérisé en ce que** l'ensemble de gestion comprend des moyens pour, périodiquement et cycliquement, transmettre, via les moyens de communication électrique, à chaque circuit individuel de traitement un message d'interrogation et des moyens pour recueillir les informations cryptées par lesdits circuits individuels en réponse aux messages d'interrogation.

10. Dispositif de .clavier selon l'une quelconque des revendications 1 à 9, **caractérisé en ce que** chaque circuit individuel de traitement comporte en mémoire sa clé spécifique de cryptage.

11. Dispositif de clavier selon l'une quelconque des revendications 1 à 10, **caractérisé en ce que** lesdites touches sécurisées constituent une matriche de touches qui est incluse dans un enrobage de matériau transparent dont la face suéprieure comporte lesdites zones sensibles.

## Claims

1. Secure keyboard device for entering information in a machine comprising:
- a keyboard with n sensitive zones (Zi)
- n detection sensors (24), each sensor being linked with a sensitive zone to detect the use of the linked sensitive zone,
- n individual processing circuits (14i), each circuit being linked with a sensor and comprising means (22, 26, 28, 30) to encrypt detection or non-detection of activation of the sensitive zone linked with the said sensor, and each assembly made up of an individual processing circuit and the linked sensor having a physically monolithic structure forming a secure key,
- an assembly (18) for managing the said keyboard,
- electrical connection means (16) for transmitting information between the said keyboard management assembly and each of the said n individual processing circuits, the said management assembly comprising means (40, 42, 44) to periodically cause the querying of the said individual processing circuits for the return transmission on the said electrical connection means (16) of encrypted information relating to the activation or non-activation of each of the said sensitive zones

2. Keyboard device according to claim 1, **characterised in that** the said sensors are capacitive detectors that are activated by the action of a finger on the corresponding sensitive zone.

3. Keyboard device according to claim 2, **characterised in that** each individual circuit (14i) is enclosed in a housing (50) and that the detection plates of the capacitor (54, 56) are formed directly on the semiconductor chip (52) in which the circuit is made.

4. Keyboard device according to claim 1, **characterised in that** the said sensors are opto-electrical detectors activated by the presence of a finger on the linked sensitive zone.

5. Keyboard device according to claim 4, **characterised in that** each individual processing circuit is enclosed in a housing with an optical window, and **in that** the said opto-electrical detector is formed directly on the semiconductor chip in which the circuit is made.

6. Keyboard device according to claim 1, **characterised in that** the said sensors are electromagnetic sensors.

7. Keyboard device according to claim 6, **characterised in that** each individual circuit (14i) is enclosed in a housing and **in that** the electromagnetic detection coil is formed directly on the semiconductor chip in which the individual circuit is made.

8. Keyboard device according to any of claims 1 to 7, **characterised in that** each individual processing circuit (14i) comprises a microprocessor (22) receiving the detection signal, memory means (26, 28, 36) to save the elements for the encryption of the information relating to detection and the use of an encryption algorithm and means (32) for transmitting to the electrical connection means (16) the encrypted information prepared by the said microprocessor.

9. Keyboard device according to any of claims 1 to 8, **characterised in that** the management assembly comprises means for the periodic and cyclical transmission via electrical communication means to each individual processing circuit of a query message and means to collect the information encrypted by the said individual circuits in response to the query message.

10. Keyboard device according to any of claims 1 to 9, **characterised in that** each individual processing circuit has a specific encryption key in its memory.

11. Keyboard device according to any of claims 1 to 10, **characterised in that** the said secure keys constitute a matrix of keys that is included in coating with transparent material where the upper side contains the said sensitive zones.

## Patentansprüche

1. Gesicherte Tastaturvorrichtung zum Eingeben von Informationen in eine Maschine, bestehend aus:
- einer Tastatur mit n berührungsempfindlichen Stellen (Zi);
- n Erfassungssensoren (24), wobei jeder Sensor mit einer berührungsempfindlichen Stelle verknüpft ist, um die Betätigung der verknüpften berührungsempfindlichen Stelle zu erfassen;
- n Verarbeitungs-Einzelschaltungen (14i), wobei jede Schaltung mit einem Sensor verknüpft ist und Mittel (22, 26, 28, 30) zum Verschlüsseln einer Erfassung bzw. Nichterfassung einer Betätigung der mit dem besagten Sensor verknüpften berührungsempfindlichen Stelle umfasst, und wobei jede aus einer Verarbeitungs-Einzelschaltung und dem verknüpften Sensor gebildete Einheit materiell eine monolithische Struktur besitzt, die eine gesicherte Taste bildet;
- einer Verwaltungseinheit (18) für die besagte Tastatur
- elektrischen Verbindungsmitteln (16) für die Informationsübertragung zwischen der Tastatur-Verwaltungseinheit und jeder der n Verarbeitungs-Einzeischaltungen, wobei die Verwaltungseinheit Mittel (40, 42, 44) zur periodischen Auslösung einer Abfrage der Vearbeitungs-Einzelschaltungen zwecks Rückübertragung verschlüsselter Informationen über die Betätigung bzw. Nichtbetätigung jeder der berührungsempfindlichen Stellen über die elektrischen Verbindungsmittel (16) umfasst.

2. Tastaturvorrichtung nach Anspruch 1, **dadurch gekennzeichnet, dass** die Sensoren kapazitive Sensoren sind, die durch eine Fingerbetätigung auf der entsprechenden berührungsempfindlichen Stelle aktiviert werden.

3. Tastaturvorrichtung nach Anspruch 2, **dadurch gekennzeichnet, dass** jede Einzelschaltung (14i) in einem Gehäuse (50) eingeschlossen ist und dass die Kondensator-Erfassungsplatten (54, 56) direkt auf dem Halbleiterchip (52), in welchem die Schaltung ausgeführt ist, ausgebildet sind.

4. Tastaturvorrichtung nach Anspruch 1, **dadurch gekennzeichnet, dass** die Sensoren optoelektrische Sensoren sind, die durch eine Fingerpräsenz auf der verknüpften berührungsempfindlichen Stelle aktiviert werden.

5. Tastaturvorrichtung nach Anspruch 4, **dadurch gekennzeichnet, dass** jede Vearbeitungs-Einzelschaltung in einem Gehäuse mit optischem Fenster eingeschlossen ist und dass der optoelektrische Sensor direkt auf dem Halbleiterchip, in welchem die Schaltung ausgeführt ist, ausgebildet ist.

6. Tastaturvorrichtung nach Anspruch 1, **dadurch gekennzeichnet, dass** die Sensoren elektromagnetische Sensoren sind.

7. Tastaturvorrichtung nach Anspruch 6, **dadurch gekennzeichnet, dass** jede Einzelschaltung (14i) in einem Gehäuse eingeschlossen ist und dass die elektromagnetische Erfassungsspule direkt auf dem Halbleiter, in welchem die Einzelschaltung ausgeführt ist, ausgebildet ist.

8. Tastaturvorrichtung nach einem der Ansprüche 1 bis 7, **dadurch gekennzeichnet, dass** jede Verarbeitungs-Einzelschaltung (14i) einen Mikroprozessor (22) zum Empfang des Erfassungssignals, Speichermittel (26, 28, 36) zum Speichern der Verschlüsselungsdaten der Erfassungsinformation und der Anwendungsdaten eines Verschlüsselungsalgorithmus sowie Mittel (32) zum Übertragen der vom Mikroprozessor ausgearbeiteten, verschlüsselten Informationen an die elektrischen Verbindungsmittel (16) umfasst.

9. Tastaturvorrichtung nach einem der Ansprüche 1 bis 8, **dadurch gekennzeichnet, dass** die Verwaltungseinheit Mittel umfasst, um eine Abfragemeldung periodisch und zyklisch über die elektrischen Kommunikationsmittel an jede Verarbeitungs-Einzelschaltung zu übertragen, sowie Mittel, um die Informationen, die von den Einzelschaltungen als Antwort auf die Abfragemeldungen verschlüsselt wurden, aufzunehmen.

10. Tastaturvorrichtung nach einem der Ansprüche 1 bis 9, **dadurch gekennzeichnet, dass** jede Verarbeitungs-Einzelschaltung ihren spezifischen Verschlüsselungsschlüssel abgespeichert hat.

11. Tastaturvorrichtung nach einem der Ansprüche 1 bis 10, **dadurch gekennzeichnet, dass** die gesicherten Tasten eine Tastenmatrix bilden, die in einem Überzug aus durchsichtigem Material eingebettet ist, dessen Oberseite die besagten berührungsempfindlichen Stellen aufweist.
